# EUROPEAN PATENT APPLICATION

(11) **EP 2 302 927 A2**
(43) Date of publication of application: **30.03.2011**
(21) Application number: 10157366.5
(22) Date of filing: 23.03.2010
(51) Int. Cl.: H04N 7/24

(54) **Authority information verifying method, display apparatus and authority information verifying system using the same**

(30) Priority: 24.09.2009 KR 20090090546
(71) Applicant: Samsung Electronics Co., Ltd., Suwon-si, Gyeonggi-do 442-742 (KR)
(72) Inventor: Lee, Tae-dong, Gyeonggi-do (KR); Choi, Chang-ki, Seoul (KR); Kim, Ki-ho, Gyeonggi-do (KR)
(74) Representative: Robinson, Ian Michael

(57) **Abstract**

A method for verifying authority information to determine whether content are created according to the authority assigned to each content provider (CP), and a display apparatus and an authority information verifying system using the same are provided. The method includes transmitting an application created using a program and displaying the application or authority information based on the authority information included with the application. Accordingly, it may be possible to easily check whether received content is created by an authorized CP, and to ensure that only an authorized application programming interface (API) is operated based on the authority information so that unauthorized content can be prevented from being created using an unauthorized API.

## Description

### CROSS-REFERENCE TO RELATED APPLICATIONS

This application claims priority from Korean Patent Application No. 10-2009-90546, filed on September 24, 2009, in the Korean Intellectual Property Office, the disclosure of which is incorporated herein by reference in its entirety.

### BACKGROUND OF THE INVENTION

### Field of the Invention

Methods and apparatuses consistent with the present invention relate to verifying authority information, and more particularly, to verifying authority information to determine whether content are created according to the authority assigned to a content provider (CP).

### Description of the Related Art

Recently, as multimedia devices become widespread, the number and type of content used in the multimedia devices is increasing geometrically. Also, thanks to the increase in the number of types of content, a user can select from a diversity of types of content.

However, along with such a positive effect of providing diverse types of content, there is a negative effect of increasing the number of undesirable content and causing damage to a system. Therefore, there is a need to screen such undesirable content.

In particular, in the case that a content provider, (CP) which creates the content, and a television (TV) (i.e., content display), which provides the content to the user, are separately provided, if the content created by the CP is not properly authenticated, the TV may allow the displaying of content which is undesirable and/or unauthorized.

Therefore, there is a need for a method for authenticating the quality of diverse content created by the CP more easily and rapidly.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

An aspect of the present invention provides a method for verifying authority information to select and display content provided by an authorized content provider (CP), a display apparatus and an authority information verifying system using the same.

According to an aspect of the present invention, a method for verifying authority information includes: transmitting, by a first device which receives a program and authority information for the program, an application created using the program to a second device, wherein the authority information is included with the transmitted application; and displaying, by the second device, one of the application and the authority information, based on the authority information included with the application received from the first device.

Different authority information may be set for each device for using the program, wherein the second device sets first authority information for the first device and transmits the first authority information to the first device, and if the authority information included with the application is not the first authority information, the second device does not display the application..

Different authority information may be set for each device for using the program, wherein the second device sets first authority information for the first device and transmits the first authority information to the first device, and displays the authority information included with the application.

Based on the authority information included with the application, the second device may determine whether an unauthorized application programming interface (API) is used to create the application, and if the unauthorized API is used, the second device does not display the application.

Based on the authority information included with the application, the second device may identify an authorized application programming interface (API) and controls the authorized API to display the application..

The program may be operable to create a widget and the application is a widget, wherein the displaying operation displays information regarding authority and type of the widget by including the information in the widget.

The program may be operable to create a widget, and the application is a widget, wherein the displaying includes displaying a first widget created by the first device differently from one of a second widget created by the second device and a separate widget created by a separate device.

The application may be packed, and the authority information may be automatically included with the application when the application is packe.

The authority information may be assigned to each entity which uses the program.

The authority information may be encrypted and transmitted from the second device to the first device and transmitted from the first device to the second device, wherein the second device decrypts the encrypted authority information.

The first device may create the application using the program, wherein the second device may be operable to display the application created by the first device or a separate application created by a separate device.

According to another aspect of the present invention, a display apparatus may include: an interface which receives an application created by a device, wherein the device receives a program and authority information for the program and uses the program to create the application, and wherein the authority information is included with the received application; and a controller which displays one of the received application and the received authority information based on the received authority information included with the received application.

Different authority information may be set for each device for using the program, wherein the controller sets first authority information for a first device and transmits the first authority information to the first device, and if the received authority information included with the received application is not the first authority information for the first device, the controller does not display the received application.

Different authority information may be set for each device for using the program, wherein the controller sets the authority information for the device and transmits the authority information to the device, and displays the received authority information.

The controller may determine whether an unauthorized API is used to create the received application, based on the authority information included with the received application, and if the unauthorized API is used, the controller does not display the received application.

The controller may identify an authorized API used to create the received application, based on the received authority information included with the received application, and only operates the authorized API to display the received application.

The program may be operable to create a widget, and the application is a widget, wherein the controller displays information regarding authority and type of the widget.

The program may be operable to create a widget, and the application is a widget, wherein the controller displays the widget created by the device, differently from a widget created by one of the display apparatus and a separate device.

The authority information may be automatically included with the application when the application created using the program is packed.

Different authority information may be assigned to each entity which uses the program.

The authority information may be encrypted and received through the interface, wherein the controller decrypts the received encrypted authority information.

According to still another aspect of the present invention, an authority information verifying system may include: a first device which receives a program and authority information for the program, and transmits an application which is created using the program; and a second device which displays the application based on authority information which is included with the application received from the first device.

According to still another aspect of the present invention, a computer readable recording medium having recorded thereon a program executing a method, of the method which may include: creating content; packing the content and including authority information for the content; receiving the packed content including the authority information; and displaying one of the received content and the received authority information, based on the received authority information included with the received content.

Additional aspects of the present invention will be set forth in the detailed description, will be obvious from the detailed description, or may be learned by practicing the invention.

### BRIEF DESCRIPTION OF THE DRAWING FIGURES

The above and/or other aspects of the present invention will be more apparent by describing in detail exemplary embodiments thereof, with reference to the accompanying drawings in which:

FIG. 1 is a view illustrating an authority information verifying system according to an exemplary embodiment of the present invention;

FIG. 2 is a flowchart illustrating a method for verifying authority information according to an exemplary embodiment of the present invention;

FIG. 3 is a flowchart illustrating a method for displaying a widget according to an exemplary embodiment of the present invention;

FIG. 4 is a view illustrating a screen on which a user widget is displayed according to an exemplary embodiment of the present invention; and

FIG. 5 is a block diagram illustrating a television (TV) according to an exemplary embodiment of the present invention.

### DETAILED DESCRIPTION OF THE EXEMPLARY EMBODIMENTS

Hereinafter, the present invention will be described in greater detail with reference to the accompanying drawings, in which exemplary embodiments are shown.

In the following description, same reference numerals are used for the same elements when they are depicted in different drawings. The matters defined in the description, such as detailed construction and elements, are merely provided to assist in a comprehensive understanding of the invention. However, the exemplary embodiments of the present invention can be carried out without those specifically defined matters. Also, functions or elements known in the related art are not described in detail since they could obscure the invention with unnecessary detail.

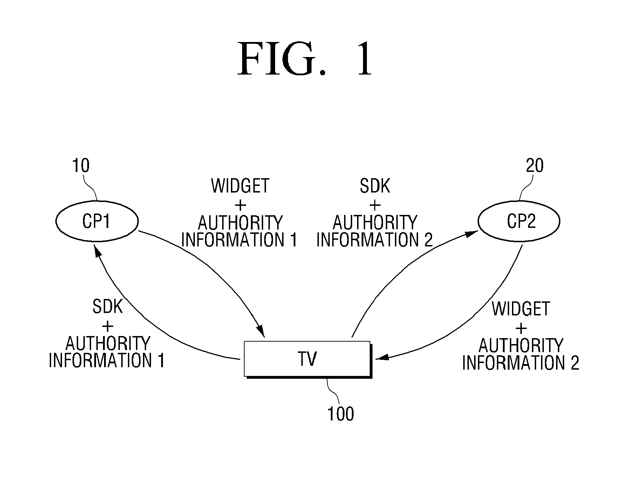

FIG. 1 is a view illustrating an authority information verifying system according to an exemplary embodiment of the present invention. The authority information verifying system according to an exemplary embodiment of the present invention is established with separate entities, one for manufacturing/creating a widget, and the other for providing the manufactured/created widget to a user.

In this exemplary embodiment, the authority information verifying system includes a TV 100 to display a widget and a content provider (CP) 1 10 and a CP2 20 to create the widget.

The TV 100 is a display apparatus which displays a widget and provides the widget to a user. However, it can be understood that the TV 100 may be an entity that produces/manufactures such a display apparatus. The TV 100 transmits a program for the creating of the widget to be displayed on the display apparatus (hereinafter, collectively referred to as "software development kit" (SDK)) to the CP1 10 and the CP2 20.

The CP may be an enterprise which specializes in creating content, but as used herein, the term "CP" encompasses all entities that can create content. That is, the CP may also be an unspecialized enterprise or an individual.

As shown in FIG. 1. the TV 100 transmits the SDK to the CP1 10 and the CP2 20 along with authority information assigned to each CP. That is, the SDK is transmitted to the CP1 10 along with authority information 1 and to the CP2 20 along with authority information 2. In particular, the authority information 1, 2 are assigned to respective CPs and encrypted so as not to be intentionally changed by each CP.

Herein, the SDK transmitted to the CP1 10 by the TV 100 may not be the same as the SDK transmitted to the CP2 20. The TV 100 may transmit different SDKs to the CPs in order to restrict the capability of each CP to develop a widget. For example, the TV 100 transmits to the CP1 10 a SDK to develop a widget about stocks and to the CP2 20 a SDK to develop a widget about weather. Different SDKs may be transmitted according to the type of a widget as described above, and also, different SDKs may be transmitted to different CPs according to the factors for representing widgets, the widgets' capacities, the widgets' sizes, and the widgets' purposes.

Table 1 is provided to explain authority information assigned to each CP and encrypted. As shown in Table 1, if authority information 08 and 04 are assigned to the CPs respectively, the authority information 08 and 04 are encrypted as 0*1234567890123456 and 0*0987654321098765, included in the SDKs, and transmitted. In this embodiment, the encryption is performed using AES128, but may be performed in any other method.

**[Table 1]**

| Original Authority Information | Encrypted Authority Information |
|---|---|
| CP1:08 | 0*1234567890123456 |
| CP2:04 | 0*0987654321098765 |

If the encrypted authority information are included in the SDKs and transmitted to the CP1 10 and the CP2 20, the CP 1 10 and the CP2 20 develop/create widgets using the transmitted SDKs. In particular, since the CP 1 10 and the CP2 20 receive the authority information which is encrypted and included in the SDK, the CP1 10 and the CP2 20 have no discretion to modify/change the authority information.

When completing the development/creation of the widgets, the CP1 10 and the CP2 20 pack the developed widgets. The packed widget includes the encrypted authority information. That is, the CP1 10 packs the created widget along with the encrypted authority information 1 and transmits them to the TV 100, and the CP2 20 packs the created widget along with the encrypted authority information 2 and transmits them to the TV 100.

The TV 100 decrypts the authority information 1, 2 received from the CP1 10 and the CP2 20, and analyzes the authority information to know whether or not an authorized CP creates the widget with an authorized right.

Table 2 is provided to explain the authority information encrypted for each CP and the decrypted authority information. As shown in Table 2, if the authority information which has been encrypted as 0*1234567890123456 and 0*0987654321098765 for respective CPs are received, the TV 100 decrypts the encrypted authority information as authority information 08 and 04, and based on the decrypted authority information, the TV 100 knows that each widget is created and transmitted with an authorized right for the CP 1 10 and the CP2 20.

**[Table 2]**

| Encrypted Authority Information | Decrypted Authority Information |
|---|---|
| | (Original Authority Information) |
| 0*1234567890123456 | 08:CP1 |
| 0*0987654321098765 | 04: CP2 |

In order to allow the TV 100 to know whether the widget is created with an authorized right or not, the display apparatus may display the decrypted authority information on a screen. Accordingly, the TV 100 can promptly know whether the widget is created with an authorized right or not and also does not display a widget that is created without an authorized right.

Also, the TV 100 can know whether a widget is created using an authorized application programming interface (API) or not based on the authority information, and if a widget is created using an unauthorized API, the TV 100 does not display the widget created using the unauthorized API or does not all the widgets.

As described above, through a first detect process of displaying decrypted authority information on the screen and a second detect process of determining whether to display a widget according to whether the API is authorized or not, it can be easily checked whether the widget is created by an authorized CP or not and a widget is prevented from being created using an unauthorized API.

It should be noted that while FIG. 1 shows the TV 100 transmitting the SDK to CP1 10 and CP2 20, the present invention is not limited to this exemplary embodiment. Alternatively, the SDK may be transmitted to a CP from another server.

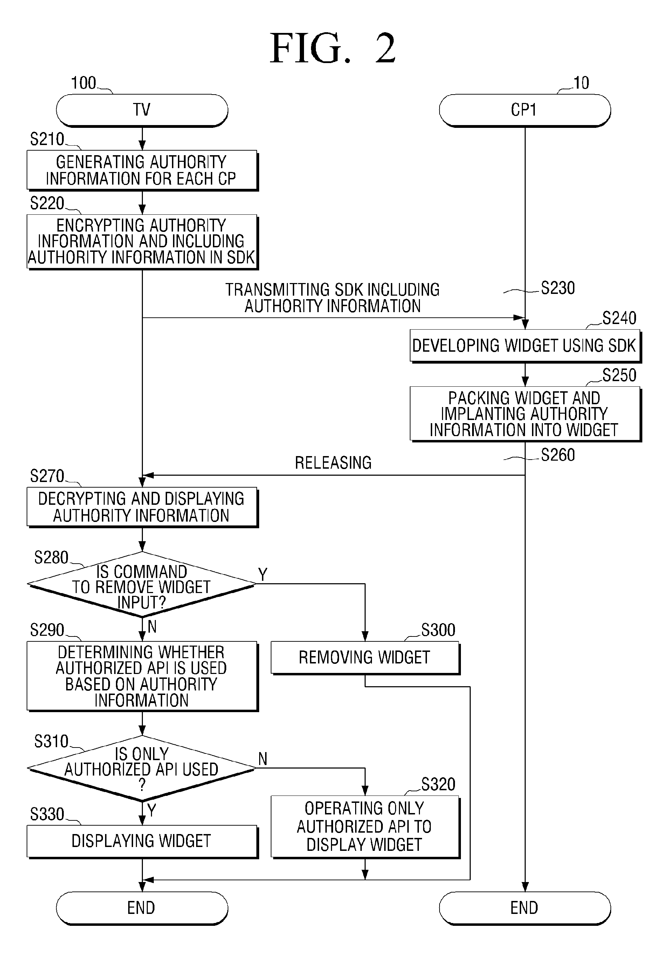

FIG. 2 is a flowchart illustrating a method for verifying authority information according to an exemplary embodiment of the present invention.

In FIG. 2, a process of verifying authority information between the TV 100 and the CP1 10 will be explained by way of an example.

In this exemplary embodiment, the TV 100 generates authority information for each CP (S210). That is, the TV 100 generates authority information in order for the CP1 10 to create a widget (S210), and encrypts the generated authority information and includes it in the SDK (S220). Also, the TV 100 transmits the SDK, including the authority information, to the CP1 10 (S230).

The CP1 10 develops a widget using the received SDK (S240) and packs the developed widget (S250). At this time, the authority information is implanted into (i.e., included with) the widget and packed along with the widget (S250). If the packed widget and authority information is released to the TV 100 (S260), the TV 100 decrypts the authority information and displays it on the screen for the user (5270) .

The user can know whether or not the widget is created by an unauthorized CP based on the decrypted authority information. Therefore, if a command to remove the widget is input from the user (S280-Y), the TV 100 removes the widget (S300) so that the widget is not displayed on the screen.

On the other hand, if a command to remove the widget is not input by the user based on the decrypted authority information (S280-N), the TV 100 determines whether an authorized API is used or not during the manufacturing/creating operation of the widget based on the authority information (S290).

If only the authorized API is used (S310-Y), the TV 100 displays the widget on the screen (S330), and if an unauthorized API is used (S310-N), the TV 100 allows only the authorized API to operate to display the widget (S320). However, if it is determined that the unauthorized API is used (S310-N), the TV 100 may operate not to display the widget.

Accordingly, it can be easily checked whether the widget is created by the authorized CP or not and only the authorized API is operated based on the authority information, so that a widget can be prevented from being created using an unauthorized API.

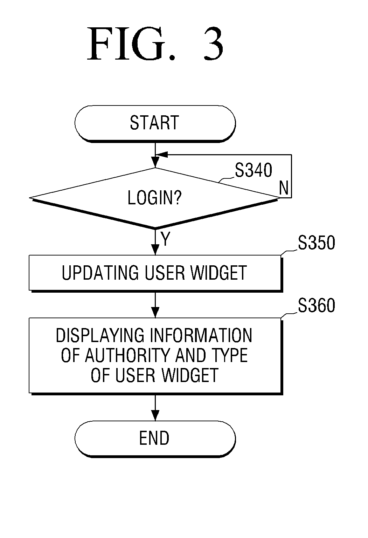

Hereinafter, a process of displaying a widget will be described in detail with reference to FIG. 3.

FIG. 3 is a flowchart illustrating a method for displaying a widget according to an exemplary embodiment of the present invention.

As shown in FIG. 3, if a user logs in (S340), a user widget is updated and displayed on the TV 100 (S350). Herein, the "user widget" refers to a widget which is created by the CP as described above. For the convenience of explanation, the widget created by the CP is referred to as a "user widget" and the widget directly manufactured or created by the TV 100 is referred to as a "general widget".

When displaying the updated user widget, the TV 100 displays the general widget on the screen. In this case, there is a problem that a user cannot discriminate between the general widget and the user widget.

Therefore, the TV 100 displays the user widget along with information about the authority and the type of the user widget so that the user widget can be discriminated from the general widget (S360).

That is, the user can identify the user widget more easily and simply and accordingly the development of the user widget can be promoted.

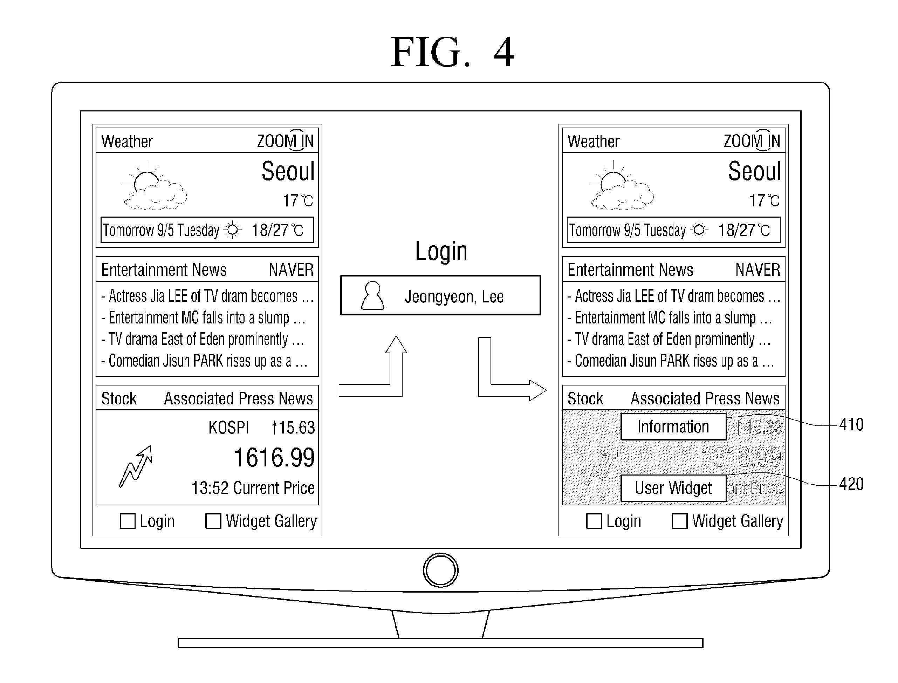

FIG. 4 is a view illustrating a screen on which the user widget is displayed. In FIG. 4, for the convenience of explanation, a view before login, a login view, and a view after login are displayed on one screen screen.

If a user widget is received from the CP1 10, the user widget is displayed on the screen of the TV 100 without being discriminated from a general widget. After that, if a user is verified by logging in, the user widget is displayed discriminately (i.e., differently) from the general widget.

In FIG. 4, in order to discriminate the user widget from the general widget, a highlight 410 indicating that information is contained therein, and a highlight 420 identifying the user widget, overlap the user widget. Of course, the view of FIG. 4 is merely an example for the convenience of explanation and any information on the widget including the authority information of the widget and the type of the widget can be regarded as being within the scope of the present invention.

As described above with regard to the exemplary embodiment depicted in FIG. 4, the user widget is displayed discriminately (i.e., differently) from the general widget so that the user might easily identify which widget is the user widget.

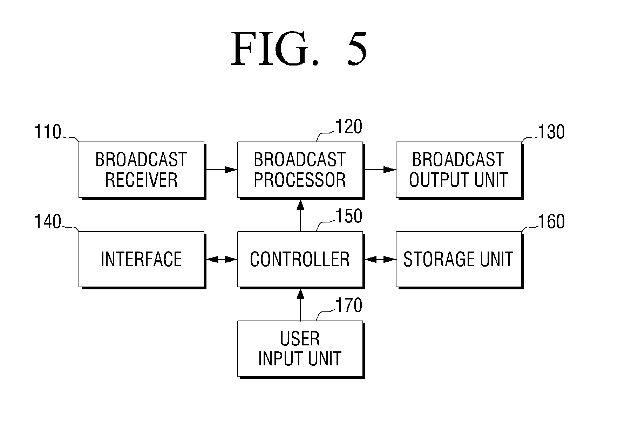

FIG. 5 is a block diagram illustrating the TV 100 described above.

As shown in FIG. 5, the TV 100 includes a broadcast receiver 110, a broadcast processor 120, a broadcast output unit 130, an interface 140, a controller 150, a storage unit 160, and a user input unit 170.

The broadcast receiver tunes and demodulates one of the broadcasts which are received in a wired or wireless manner (e.g., through the air, cable or network).

The broadcast processor 120 signal-processes broadcast signals output from the broadcast receiver 110. More specifically, the broadcast processor 120 divides the broadcast signals output from the broadcast receiver 110 into audio signals, video signals, and additional data, and decodes the audio signals divided from the broadcast signals, and converts the decoded audio signals into audio signals of a format which can be output through a speaker provided on the TV 100.

Also, the broadcast processor 120 decodes the video signals divided from the broadcast signals, and converts the decoded video signals into video signals of a format which can be output through a display provided on the TV 100. To accomplish this, the broadcast processor 120 performs color signal processing and scaling with respect to the decoded video signals.

Also, the broadcast processor 120 creates a widget to be displayed on the display under the control of the controller 150. Herein, the widget includes a general widget created by the TV 100 and a user widget received from a CP through the interface 140, which will be described in detail below.

The broadcast output unit 130 outputs a video and an audio corresponding to the video signals and the audio signals output from the broadcast processor 120 and provides them to the user.

In this exemplary embodiment, the interface 140 serves as a passage to transmit a SDK to the CP and receive a widget from the CP. Accordingly, the user widget received from the CP through the interface 140 is processed by the broadcast processor 120, under the control of the controller 150, and is displayed on the screen along with the general widget.

The storage unit 160 stores information regarding the broadcast program received by the broadcast receiver 110, authority information for each CP, and a program for operating the TV 100. The storage unit 160 may be realized as a hard disk or a non-volatile memory.

The user input unit 170 transmits a user command which is input through a remote controller (not shown) or a manipulation button (not shown) provided on a front panel of the TV 100 to the controller 150.

The controller 150 controls the overall operation of the TV 100 according to the user command transmitted from the user input unit 170.

Although the method for the TV 100 to assign authority to the CP is described above, this is merely an example. For example, the technical idea of the present invention can be applied to the situations in which a user using the TV 100 assigns authority to the CP by transmitting a SDK including authority information using a storage medium.

Although the authority to create a widget is assigned, the technical idea of the present invention can be applied to the situations in which the authority to create other items or content may be assigned.

Also, although the TV 100 is explained as an example of an enterprise assigning authority, this is merely an example. Any display apparatus that can display items or content such as widgets can be regarded as being within the technical scope of the present invention.

According to an aspect of the present invention, it may be possible to easily determine whether content are created by an authorized CP, and only an authorized API is operated based on the authority information so that particular types of content can be prevented from being generated using an unauthorized API.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for verifying authority information, the method comprising:
transmitting, by a first device which receives a program and authority information for the program, an application created using the program to a second device, wherein the authority information is included with the transmitted application; and
displaying, by the second device, one of the application and the authority information, based on the authority information included with the application received from the first device.

2. The method as claimed in claim 1, wherein different authority information is set for each device for using the program,
wherein the second device sets first authority information for the first device and transmits the first authority information to the first device, and if the authority information included with the application is not the first authority information, the second device does not display the application.

3. The method as claimed in claim 1 or 2, wherein different authority information is set for each device for using the program,
wherein the second device sets first authority information for the first device and transmits the first authority information to the first device, and displays the authority information included with the application.

4. The method as claimed in any of claims 1 to 3, wherein, based on the authority information included with the application, the second device determines whether an unauthorized application programming interface (API) is used to create the application, and if the unauthorized API is used, the second device does not display the application.

5. The method as claimed in any of claims 1 to 4, wherein, based on the authority information included with the application, the second device identifies an authorized application programming interface (API) and controls the authorized API to display the application.

6. The method as claimed in any of claims 1 to 5, wherein the program is operable to create a widget and the application is a widget,
wherein the displaying operation displays information regarding authority and type of the widget by including the information in the widget.

7. The method as claimed in any of claims 1 to 6, wherein the program is operable to create a widget, and the application is a widget,
wherein the displaying includes displaying a first widget created by the first device differently from one of a second widget created by the second device and a separate widget created by a separate device.

8. The method as claimed in any of claims 1 to 7, wherein the application is packed, and the authority information is automatically included with the application when the application is packed.

9. The method as claimed in any of claims 1 to 8, wherein the authority information is assigned to each entity which uses the program.

10. The method as claimed in any of claims 1 to 9, wherein the authority information is encrypted and transmitted from the second device to the first device and transmitted from the first device to the second device,
wherein the second device decrypts the encrypted authority information.

11. The method as claimed in any of claims 1 to 10, wherein the first device creates the application using the program,
wherein the second device is operable to display the application created by the first device or a separate application created by a separate device.

12. A computer readable recording medium having recorded thereon a program executing a method as claimed in any of claims 1 to 11 comprising:
creating content;
packing the content and including authority information for the content;
receiving the packed content including the authority information; and
displaying one of the received content and the received authority information, based on the received authority information included with the received content.

13. A display apparatus comprising:
an interface which receives an application created by a device, wherein the device receives a program and authority information for the program and uses the program to create the application, and wherein the authority information is included with the received application; and
a controller which displays one of the received application and the received authority information based on the received authority information included with the received application.

14. The display apparatus as claimed in claim 13, wherein different authority information is set for each device for using the program,
wherein the controller sets first authority information for a first device and transmits the first authority information to the first device, and if the received authority information included with the received application is not the first authority information for the first device, the controller does not display the received application.

15. The display apparatus as claimed in claim 13 or 14, wherein different authority information is set for each device for using the program,
wherein the controller sets the authority information for the device and transmits the authority information to the device, and displays the received authority information.
